(19) Europäisches Patentamt / European Patent Office / Office européen des brevets

(11) EP 2 282 419 B1

## (12) EUROPEAN PATENT SPECIFICATION

(45) Date of publication and mention
of the grant of the patent:
**16.04.2014 Bulletin 2014/16**

(21) Application number: **10171623.1**

(22) Date of filing: **02.08.2010**

(51) Int Cl.:
**H04B 7/08** *(2006.01)*        **H04B 7/10** *(2006.01)*

(54) **Method and apparatus for reconstructing high-frequency multiple signals transmitted on a single radio-relay channel.**

Verfahren und Vorrichtung zur Rekonstruktion von hochfrequenten Mehrfachsignalen, die auf einem Einzelrichtfunkkanal gesendet wurden

Procédé et appareil pour la reconstruction de signaux multiples haute fréquence transmis dans un canal de relais radio unique

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **06.08.2009 IT MI20091431**

(43) Date of publication of application:
**09.02.2011 Bulletin 2011/06**

(73) Proprietor: **SIAE Microelettronica S.p.A.
20093 Cologno Monzese (MI) (IT)**

(72) Inventor: **ROSSI, Leonardo
20093, COLOGNO MONZESE (MI) (IT)**

(74) Representative: **Raimondi, Margherita et al
Dott. Ing. Prof. Alfredo Raimondi S.r.l.,
Piazzale Cadorna, 15
20123 Milano (IT)**

(56) References cited:
**GB-A- 1 439 302     US-A- 4 638 318
US-A- 4 870 423**

EP 2 282 419 B1

**Description**

The present invention relates to a method and an apparatus for reconstructing signals transmitted in modulation on a single, short-section, radio relay channel, comprising multiple antennas and multiple channel input/output.

It is known in the technical sector of telecommunications that there exists a need to have systems with an increasingly greater capacity. In particular, these types of systems are increasingly required in an urban environment and over short distances in order to provide high-speed wireless Internet connections and data services.

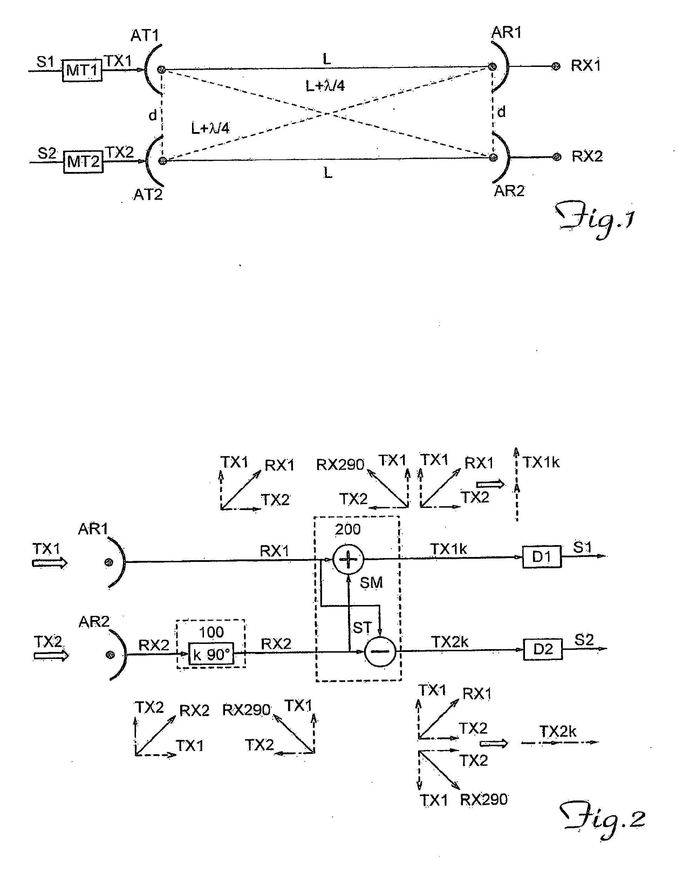

A known technique for providing these connections uses the antenna configuration which is shown in the diagram of Figure 1 and which envisages two transmitting antennas AT1 and AT2 which transmit a respective signal TX1, TX2 both using the same radio channel, on the same carrier frequency, typically with a value of about 10 GHz, or more, to two receiving antennas, AR1, AR2, which are situated at a typical distance of about 10 km or less.

The transmitted signals TX1 and TX2 are generated by two conventional modular/transmitter functional units MT1, MT2 which have at their input respective original baseband signals S1 and S2.

With reference to the focal points of each antenna, the two pairs of transmitting/receiving antennas must be arranged in such a way that:

- the distance between the first transmitting antenna AT1 and the first receiving antenna AR1 and between the second transmitting antenna AT2 and the second receiving antenna AR2 is equal to "1" and;
- the distance between AT1 and AR2 and between AT2 and AR1 is equal to $1+\lambda/4$, $\lambda$ being the wavelength of the carrier;

If, for example, a transmission frequency of the radio relay of 18.5 GHz is assumed, $\lambda/4$ is about 4 mm, and, if the distance 1 between the two pairs of antennas AT1,AR1 and AT2,AR2 is 10 km, the relative distance "d" between the two transmitting antennas AT1,AT2 and receiving antennas AR1,AR2 must be equal to about 9 m.

With this configuration of the radio relay a relative interference arises such that each of the receiving antennas AR1,AR2 will receive signals RX1,RX2 each respectively containing the signals TX1 and TX2 transmitted by each antenna AT1,AT2, with the same intensity and with a relative phase-shift which is constant over time, since the section is "short".

Also known are techniques which allow demodulation and separation, during reception, of the signals transmitted using these methods and therefore received with the interfering signal superimposed on the useful signal; said techniques, however, require a heavy and complex circuit design which is particularly costly. Other examples of the prior art are disclosed into GB 1 439 302.

The technical problem which is posed, therefore, is to develop a method and an associated apparatus which are able to allow in a particularly simple and low-cost manner separation and demodulation of the signals received by two receiving antennas of short-section radio relays which transmit on a single channel and at high frequency modulated signals, allowing doubling of the transmission capacity by means of the simultaneous use of two co-polar transmitters acting on two different antennas.

These results are achieved according to the present invention by a method according to the characteristic features of Claim 1 and by an apparatus according to the characteristic features of Claim 9.

Further details may be obtained from the following description of a non-limiting example of embodiment of the method and apparatus of the present invention provided with reference to the accompanying drawings in which:

Figure 1 shows:    the diagram of the radio relay configuration to which the method according to the invention is applied;

Figure 2 shows:    the circuit diagram of a first embodiment of an apparatus according to the present invention for separating and demodulating a pair of signals each transmitted by a respective antenna;

Figure 3 shows:    the diagram of a second embodiment of an apparatus according to the present invention for separating and demodulating two pairs of signals transmitted in pairs by a respective antenna with double polarization;

Figure 4 shows:    the diagram of a third embodiment of an apparatus according to the present invention with elimination of the interference performed in

Figure 5 shows:    baseband using digital technology; the diagram of a fourth embodiment of an apparatus according to the present invention operating on baseband signals.

According to the radio relay structure shown in Fig. 1, the two pairs of transmitting antennas AT1,AT2 and receiving antennas AR1,AR2 are arranged in such a way that:

- the distance between the first transmitting antenna AT1 and the first receiving antenna AR1 and between the second transmitting antenna AT2 and the second receiving antenna AR2 is equal to "1" and;
- the distance between AT1 and AR2 and between AT2 and AR1 is equal to $1+\lambda/4$, $\lambda$ being the wavelength of the carrier;

- the distance between AT1 and AT2 and between AR1 and AR2 being equal to "d";

this configuration, according to the meaning of the present invention and for the purposes thereof, will be referred to below also as being of the "short section" type, i.e. a section where the propagation phenomena do not manage to produce variations in the predefined geometry;

Fig. 2 shows a first example of embodiment of the apparatus according to the present invention for extraction of the pair of signals transmitted using the signals RX1 and RX2 output by the associated receiving antenna AR1 and AR2; each of these signals is composed of the sum of the two signals TX1 and TX2 baseband modulated by a respective source signal S1,S2 transmitted by the respective antenna AT1,AT2.

In greater detail, considering the fixed geometric configuration of the antennas, the signal RX1, received by AR1 is a signal which is the sum of the useful signal TX1 transmitted by AT1 and the interfering component TX2 transmitted by AT2, delayed by $\lambda/4$, namely 90°, TX1 and TX2 preferably having the same power, and

the signal RX2 received by AT2 is a signal which is the sum of the useful signal TX2 transmitted by AT2 and the interfering component TX1 delayed by 90°. Since the powers of the signals TX1, TX2 transmitted by AT1,AT2 are the same, the power of the signals RX1,RX2 received and the power of their respective interfering component TX2,TX1 are also the same.

During reception, one of the two receiving antennas, AR2 in the example shown, has its output connected to the input of a phase-shifter stage 100 which comprises a phase-shifter circuit, $\varphi$90, which, receiving at its input the signal RX2, generates at its output a signal RX2-90 with unvaried power (the same as RX1,RX2), but 90° phase-shifted with respect to the signal RX2 received by the antenna.

The signal RX1 output by AR1 and the signal RX2-90 output by the phase shifter $\varphi$90 are sent to the input of a separator stage 200 which comprises an adder circuit SM which performs the addition of the two signals, generating at its output a signal, TX1k, which contains only the sum of only the useful components TX1 present in phase both in RX1 and in RX2-90, while the interfering component TX2, being in phase-opposition both in RX1 and in RX2-90, is eliminated during the addition; a signal TX1k = 2*TX1 is therefore provided, said signal having double the amplitude of the useful signal TX1.

The signal RX1 output by the antenna AR1 and the signal RX2-90 output by the phase shifter, $\varphi$90, are sent to the input also of a subtractor circuit ST which determines the difference between the two signals.

The subtractor circuit ST therefore generates at its output a signal, TX2k, i.e. the difference between RX1 and RX2-90, which contains the sum of only the useful components TX2 present both in RX1 and in RX2-90, while the interfering component TX1 present in phase-opposition in the same two signals, RX1, RX2-90, is eliminated; the difference therefore produces a signal TX2k=2*TX2, i.e. with an amplitude double that of the useful signal TX2. The signal TX1k output by the adder circuit SM and the signal TX2k output by the subtractor circuit ST are sent to a respective conventional demodulator circuit D1,D2 at the output of which the modulating signals S1,S2 are regenerated in baseband. According to a preferred embodiment it is envisaged that the phase-shifter stage 100 is of the variable type so as to allow static set-up of the apparatus at the moment of activation.

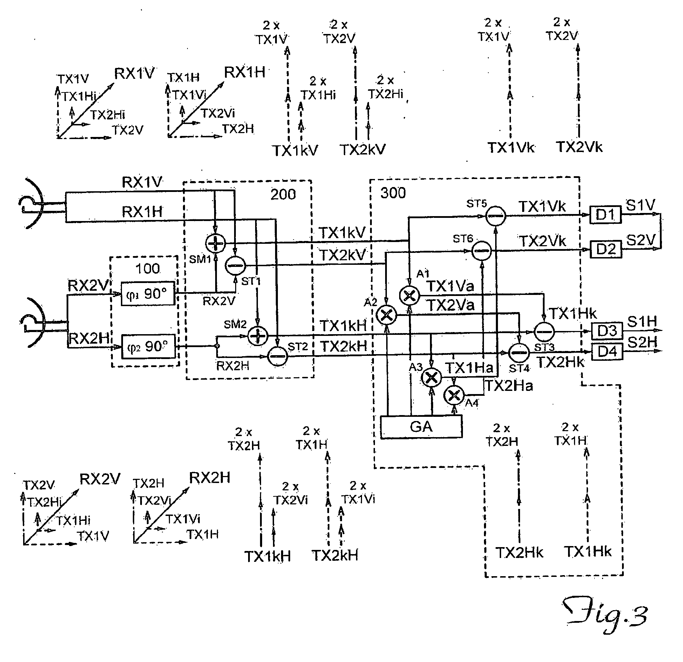

Fig. 3 shows a second example of embodiment of the apparatus according to the present invention, suitable for application to a radio relay in which, while maintaining the same geometrical configuration already described, the transmission capacity is further doubled, resulting in four baseband signals, S1V,S1H,S2V,S2H, which are transmitted on a signal radio channel using double polarization, i.e. vertical polarization (V) and horizontal polarization (H), of two pairs of modulated signals TX1V,TX1H and TX2V,TX2H transmitted by AT1 and AT2, respectively.

It is understood that vertical polarization (V) and horizontal polarization (H) are examples of polarization which could be of any other kind such as circular left-handed or right-handed polarization.

In this case TX1V,TX1H are the two signals originating from the two baseband source signals S1V and S1H and transmitted by the antenna AT1, with V and H polarization, respectively; similarly, TX2V and TX2H are the two signals originating from the other two baseband source signals S2V,S2H and transmitted by the antenna AT2, with V and H polarization, respectively.

Consequently, the signals RX1V and RX1H relating to the two polarizations V,H of the first signals S1V and S1H are present on the two outputs of the first receiving antenna AR1 and the two signals RX2V and RX2H relating to the two polarizations V,H of the second source signals S2V and S2H are present on the two outputs of the antenna AR2.

Each signal received, RX1V,RX1H,RX2V,RX2H, is the sum of the two useful signals with the same (co-polar) polarization and the two interfering signals with different (cross-polar) polarization transmitted by the two antennas AT1 and AT2.

In particular:

- RX1V is the sum of two useful co-polar components TX1V and TX2V, 90° phase-shifted, transmitted with V polarization and of two cross-polar interfering components TX1Hi and TX2Hi, also 90° phase-shifted, due to the signals TX1H and TX2H transmitted with H polarization.

- RX1H is the sum of two co-polar components TX1H and TX2H, 90° phase-shifted, and of the cross-polar interfering components TX1Vi and TX2Vi, 90° phase-shifted;

- RX2V is the sum of two co-polar components TX2V and TX1V, 90° phase-shifted, and of the cross-polar interfering components TX2Hi and TX1Hi, 90° phase-shifted;
- RX2H is the sum of two co-polar components TX2H and TX1H, 90° phase-shifted, and of the cross-polar interfering components TX2Vi and TX1Vi, 90° phase-shifted;

$$RX1V= TX1V+TX2V_{90}+TX1Hi+TX2Hi_{90}$$

$$RX1H= TX1H+TX2H_{90}+TX1Vi+TX2Vi_{90}$$

$$RX2V= TX2V+TX1V_{90}+TX2Hi+TX1Hi_{90}$$

$$RX2H= TX2H+TX1H_{90}+TX2Vi+TX1Vi_{90}$$

Since the power levels of the signals transmitted by AT1 and AT2 are the same and the four antennas have the same characteristics, therefore also the power levels of the four signals received RX1V,RX1H,RX2V,RX2H are the same, the powers levels of the respective four useful components TX1V,TX1H,TX2V,TX2H are the same, and the power levels of the respective four interfering components TX1Vi,TX1Hi,TX2Vi,TX2Hi are the same.

The power of the interfering components TX1Vi,TX1Hi,TX2Vi,TX2Hi is moreover attenuated, with respect to the corresponding useful components TX1V,TX1H,TX2V,TX2H, by an amount equal to the cross-polar discrimination ratio (XPD), owing to the characteristics of each pair of transmitting/receiving antennas, reduced by 3 dB. Normally with commonly used antennas the final ratio manages to reach a value of 27 dB.

In a similar manner to the first embodiment the outputs of one of the two antennas, for example RX2V and RX2H, output by AR2, are sent to the input of a phase-shifter stage 100 comprising two respective phase shifters, $\varphi_1 90, \varphi_2 90$, which generate at their output a respective signal RX2-90V and RX2-90H, with unvaried power, but 90° phase-shifted with respect to the input signal RX2V, RX2H, RX2H. The signals output by the first receiving antenna AR1 and the signals output by the phase-shifter block 100 are sent to a separator stage 200 inside which they are processed in order to separate the components originating from either one of the antennas.

In greater detail:

- the output signal, RX1V, from the antenna AR1 and the output signal RX2-90V from the first phase shifter $\varphi_1 90$ are sent to the input of a first adder SM1 and to a first subtractor ST1. The adder SM1 performs the addition of the two signals, RX1V,RX2-90V, generating at its output a signal TX1kV which contains the sum of only the components 2*TX1V and 2*TX1Hi, transmitted by the first antenna AT1, while the components transmitted by the other antenna AT2, being in phase-opposition, are eliminated; said signal TX1kV is therefore the sum of the useful component TX1V and the interfering component TX1Hi transmitted by the same antenna AT1 and received by both the antennas AR1,AR2 (TX1S1V = 2*TX1V + 2*TX1Hi).

The subtractor ST1 determines the difference between the two same signals, RX1V,RX2-90V, generating at its output a signal, TXkV, which contains the sum of only the in-phase components 2*TX2V and 2*TX2Hi, transmitted by the second antenna AT2 and received by both the receiving antennas AR1,AR2, while the components transmitted by the other antenna AT1, being in phase-opposition, are eliminated; said signal TX2kV is therefore the sum of the useful component TX1V and the interfering component TX1Hi transmitted by the same antenna AT1 and received by both the antennas AR1,AR2 (TX2'V = 2*TX2V + 2*TX2Hi).

In the same way as for the polarization signals H, the output RX1H of AR1 and the output RX2-90H of the second phase shifter $\varphi_2 90$ are input into a second adder circuit SM2 and a second subtractor circuit ST2 which generate two respective sum/difference signals similar to the preceding signals, but relating to the second polarization H: TX1kH = 2*TX1H + 2*TX1Vi ; TX2kH = 2*TX2H + 2*TX2Vi.

As in the preceding case each of these two signals contains the respective useful components and interfering components transmitted by only one respective transmitting antenna AT1,AT2.

As shown in Figure 3, in order to eliminate from each of the four signals TX1kV, TX2kV, TX1kH and TX2kH, the cross-polar interfering component (TX1Hi,TX2Hi,TX1Vi,TX2Vi) transmitted by the same antenna which transmitted the useful signal, a suppressor stage 300 is used, said stage comprising four variable attenuators A1,A2,A3,A4 controlled by a conventional AG (Adaptive Gain) device which controls them in an adaptive manner; this adaptive control is introduced since it is not possible to know beforehand the exact final values of the cross-polar discriminant (XPD) of the section under construction, and the gain value which eliminates precisely the amount of the actual final interference must be determined.

Each of the said outputs of A1,A2,A3,A4 is sent to a respective subtractor circuit, ST3,ST4,ST5,ST6, which receives at its input also the respective signal TX1kH, TX2kH, TX1kV, TX2kV, which is the sum of the useful component and the interfering component, the difference resulting in elimination thereof. In particular:

- ST3 receives at its input TX1kH and the output of TX1Va of A1, generating at its output the signal TX1Hk$\leq$2*TX1H;
- ST4 receives at its input TX2kH and the output of TX2Va of A2, generating at its output the signal TX2Hk$\leq$2*TX2H;
- ST5 receives at its input TX1kV and the output of TX1Ha of A3, generating at its output the signal TX1Vk$\leq$2*TX1V;
- ST6 receives at its input TX2kV and the output of TX2Ha of A4, generating at its output the signal TX2Vk$\leq$2*TX2V.

The said four signals TX1Vk,TX2Vk,TX1Hk,TX2Hk are sent to the input of a respective receiver/demodulator circuit D1,D2,D3,D4, which generates at its output the respective original signal S1V,S2V,S1H and S2H in baseband.

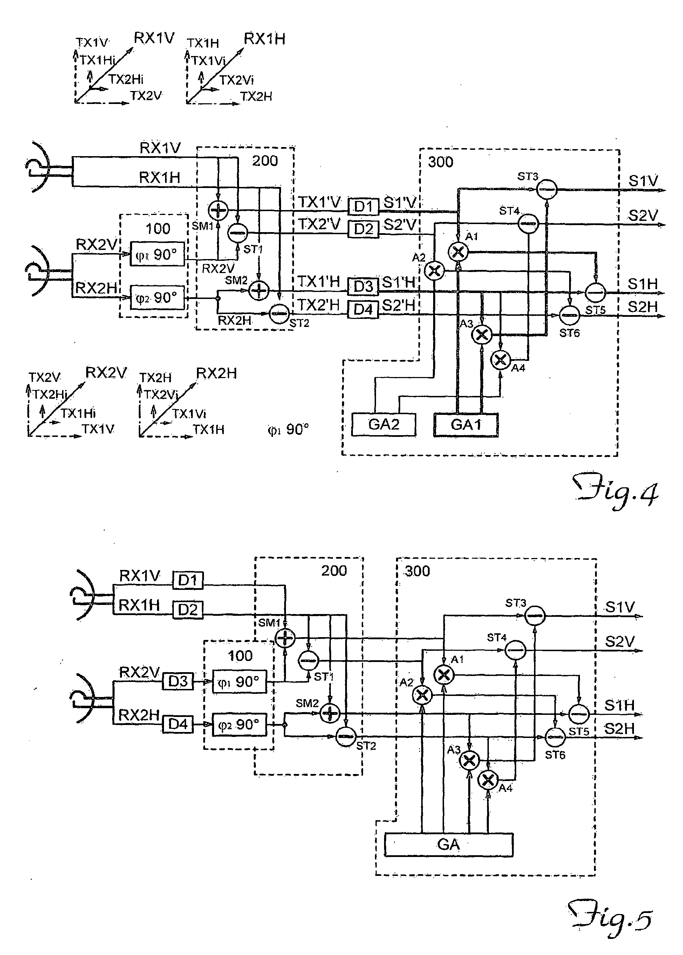

Fig. 4 shows a third example of embodiment of a radio relay for four signals provided according to the present invention, in which the operation of suppression of the cross-polar interfering components of each signal is performed in baseband downstream of the receivers/demodulators D1, D2, D3, D4 instead of in radiofrequency and upstream thereof.

Suppression of the co-polar interfering components from the two pairs of signals RX1V,RX1H,RX2V,RX2H, received by the two antennas AR1,AR2. or separation of the components transmitted by each single antenna AT1,AT2. is achieved in an identical manner and using the same circuits compared to that illustrated in the preceding example of Fig. 3, performing firstly the said phase-shift and separation by means of a first phase-shifter stage 100 followed by a separator stage 200 which operate at radiofrequency, generating the signals TX1'V,TX2'V,TX1'H,TX2'H which contain only sums of components from a same transmitting antenna AT1,AT2, subsequently demodulating each signal thus obtained by means of a respective demodulator D1,D2,D3,D4 which converts the said signals into baseband and sending the demodulated signals to the input of the suppressor stage 300 which, operating in baseband, performs the suppression of the residual interfering component in a manner entirely similar to that already described in relation to the example of Fig. 3.

In this embodiment circuits are used for digital processing of the signals sampled at the output of the respective receivers/demodulators which are per se conventional and therefore not described.

As shown in Figure 4 in continuous bold lines, by operating in baseband and separating the amplitude controllers GA1 and GA2, it is possible to reduce the physical connection necessary for the various operations to the sole pairs 1V and 1H separately from the pairs 2V and 2H, thus simplifying considerably the circuit design while improving the cost-effectiveness and the overall reliability. Should the demodulators output signals with a rotation which is random, but fixed by the demodulator itself, it is possible to introduce a rotating device upstream of the suppression stages 300 in order to restore the signals to the desired condition.

Fig. 5 shows a fourth example of embodiment of a radio relay for four signals according to the present invention, in which all the operations for separation of the signals received and suppression of the interfering components are performed in baseband using digital technology applied to the signals suitably sampled downstream of the demodulators situated directly at the outputs of the two receiving antennas.

Since, in digital signal processing technology, the circuits and the calculations necessary for performing the functions specified in this device are known, i.e. separation of the signals received and suppression of the cross-polar interference, Figure 5 shows only the basic diagram which illustrates the sequence of functional units in this embodiment.

It should be noted also that, compared to conventional technology, this fourth embodiment allows also a significant simplification of the circuits, in both quality and quantity terms, required for correct demodulation.

The present invention relates furthermore to a method for separating and demodulating high-frequency signals which are transmitted on a single radio-relay channel comprising a first transmitting antenna AT1 and a second transmitting antenna AT2 and corresponding first receiving antenna AR1 and second receiving antenna AR2, said radio relay being configured with a layout in which:

- the distance between the first transmitting antenna AT1 and the first receiving antenna AR1 and between the second transmitting antenna AT2 and the second receiving antenna AR2 is equal to "1" and;
- the distance between the first transmitting antenna AT1 and the second receiving antenna AR2 and between the second transmitting antenna AT2 and the first receiving antenna AR1 is equal to 1+$\lambda$/4, $\lambda$ being the wavelength of the carrier;

- the distance between AT1 and AT2 and between AR1 and AR2 being equal to "d";
- two modulating source signals S1 and S2 modulation transmitted on the same high-frequency channel;

On the basis of the said geometrical configuration of the radio relay and with transmission of a pair of source signals S1,S2 in baseband:

- at the output of the first receiving antenna AR1 there is a modulated signal RX1 formed by a first component TX1 modulated by S1 and due to the signal transmitted by the first antenna AT1 and a second interfering component TX2 modulated by S2 and due to the signal transmitted by the second antenna AT2 and received 90° phase-shifted with respect to the useful component TX1 and
- at the output of the second receiving antenna AR2 there is a second modulated signal RX2 formed by a first component TX2 due to the signal transmitted by the first antenna AT2 and a second interfering component TX1 due to the signal transmitted by the first antenna AT1 and received 90° phase-shifted with respect to the useful component TX2; the intensity of the useful and interfering signals being the same.

The reconstruction method according to the invention comprises the following steps:

- 90° phase-shifting in an anticlockwise direction one of the two signals (RX2) received by one of the two antennas (AR2);
- adding the 90° phase-shifted signal (RX290) to the other signal (RX1) output by the other receiving antenna (AR1); as a result of the addition the interfering component TX2 present both in RX1 and in RX290 is suppressed since it has the same amplitude, but is in phase opposition, while the respective useful components TX1 which have the same level and are in phase with each other are added together; consequently the signal resulting from the addition is TX1k = 2*TX1, namely only the useful signal with an amplitude double that of the signal received by each receiving antenna AR1,AR2;
- subtraction between the signal RX1 received by the first antenna AR1 and the signal RX2-90 received by the other antenna AR2 90° phase-shifted;
- the difference is equivalent to adding to the first signal RX1 the second signal RX2-90 rotated through 180°, producing a signal TX2k in which the interfering components transmitted by the first antenna AT1 and present both in RX1 and in RX290 are suppressed each other since they have the same level, but are in phase-opposition, while the useful components TX2 with the same level transmitted by the second antenna AT2 are added together since they are in phase with each other.

Once the two signals, i.e. sum signal TX1k and difference signal TX2k, which contain only the respective useful components TX1,TX2 transmitted by the respective antenna AT1,AT2 have been obtained, the same signals are sent to a respective demodulator D1,D2 which outputs the two original signals S1,S2 in baseband.

If, in the same emitting installation, each antenna AT1,AT2 transmits on the same channel two pairs of signals TX1V,TX1H and TX2V,TX2H modulated by a respective source signal S1V,S1H,S2V,S2H, using double polarization, i.e. vertical polarization V and horizontal polarization H, the method according to the invention comprises the following steps:

- sending, by the first transmitting antenna AT1, the first signals, i.e. the vertical polarized signal TX1V and horizontal polarized signal TX1H, and
- sending, by the second transmitting antenna (AT2), the second signals TX2V, i.e. vertical polarized signal V and horizontal polarized signal H;
- reception of two signals RX1V,RX1H, with different polarization at the output of the first receiving antenna AR12, and of two signals, RX2V,RX2H, with different polarization at the output of the second receiving antenna AR2.

Each of the two signals received by the respective antenna AR1,AR2 is the sum of the useful and interfering co-polar and cross-polar components transmitted by both the antennas AT1,AT2, each component of the co-polar and cross-polar pair being 90° phase-shifted relative to each other, namely

$$RX1V= TX1V+TX2V_{90}+TX1Hi+TX2Hi_{90}$$

$$RX1H= TX1H+TX2H_{90}+TX1Vi+TX2Vi_{90}$$

$$RX2V= TX2V+TX1V_{90}+TX2Hi+TX1Hi_{90}$$

$$RX2H= TX2H+TX1H_{90}+TX2Vi+TX1Vi_{90}$$

- 90° phase-shifting of both the signals RX2V,RX2H received by one antenna AR2 of the two receiving antennas AR1,AR2 with generation of respective signals RX2V-90,RX2H-90;
- addition of the first vertical polarized signal RX1V received by the first antenna AR1 and the other vertical polarized signal RX2V-90 phase-shifted 90°,
  with generation of a signal TX1kV in which the component TX2V and the interfering component TX2H1 which are transmitted by the other antenna (AT2) and are in phase-opposition are eliminated and in which the useful component TX1V and the interfering component TX1Hi which are transmitted by the first antenna (AT1) and are in phase are added together, generating a signal

$$TX1kV = 2TX1V + 2*TX1Hi$$

with an amplitude double that of the useful component TX1V received by each receiving antenna;
- subtraction between the same first vertical polarized signal RX1V output by the first antenna AR1 and RX2V-90 output by the phase-shifter $\varphi90$ with generation of a difference signal TX2kV in which the useful component TX1V and the interfering component TX1Hi which originate from the first antenna AT1 and are in phase-opposition are eliminated and in which the useful component TX2V and the interfering component TX2H1 which originate from only the second antenna AT2 and are in phase are added together, generating a signal

$$TX2kV = 2*TX2V + 2*TX2Hi$$

with an amplitude double that of the useful component TX2V received by each receiving antenna;
- addition of the first horizontal polarized signal RX1H and the second copolar signal RX2H-90 phase-shifted 90°, with generation of a signal TX1kH in which the components TX2H,TX2Vi which originate from the second antenna AT2 and are in phase-opposition are eliminated and in which the components TX1H, TX1Vi which originate from the first antenna AT1 and are in phase are added together, generating a signal

$$TX1kH = 2*TX1H + 2*TX1Vi$$

with an amplitude double that of the useful component TX1H received by each receiving antenna;
- subtraction between the same horizontal co-polar signals RX1H and RX2H-90 with generation of a signal TX2kH in which the interfering components TX1H, TX1Vi which originate from the first transmitting antenna AT1 and are in phase-opposition are eliminated and the useful component TX2H and the interfering component TX2V1 which originate from only the second transmitting antenna AT2 and are in phase are added together, generating a signal

$$TX2kH = 2*TX2H + 2*TX2Vi$$

with an amplitude double that of the useful component TX2H received by each receiving antenna. Each pair of sum/difference signals TX1kV,TX1kH and TX2kV,TX2kH contains the respective useful and interfering components transmitted by only the respective transmitting antenna AT1 or AT2 and it is therefore necessary to suppress the associated interfering cross-polar component from each signal.

Since each cross-polar interfering component is equal to a corresponding useful signal TX1V,TX2V,TX1H,TX2H attenuated by a factor equal to the cross/polar discrimination ratio (XPD), generated by the chain of the two transmitting/receiving antennas, in order to suppress the said cross-polar components, the following further method steps are envisaged:

- attenuation of each sum/difference signal TX1kV,TX1kH,TX2kV,TX2kH automatically by means of methods used in cross-polar interference elimination, i.e. generating four signals TX1Va,TX2Va,TX1Ha,TX2Ha with an amplitude such that the component contained in them without the final "i" is equal to the respective interfering component present in the said sum signals, distinguished by the opposite polarization letter, i.e. such that:

$$TX1Va \text{ (for its first component vector)} = 2*TX1Vi,$$

$$TX2Va \text{ (for its first component vector)} = 2*TX2Vi,$$

$$TX1Ha \text{ (for its first component vector)} = 2*TX1Hi,$$

$$TX2Ha \text{ (for its first component vector)} = 2*TX2Hi,$$

- subtraction of each of said attenuated signals TX1Va,TX2Va,TX1Ha,TX2Ha from the respective sum/difference signal TX1kH,TX2kH,TX1kV,TX2kV by means of a corresponding subtractor ST3,ST4,ST5,ST6, obtaining the following four signals:

$$TX1Vk = TX1kV - TX1Ha = 2*TX1V$$

$$TX2Vk = TX2kV - TX2Ha = 2*TX2V$$

$$TX1Hk = TX1kH - TX1Va = 2*TX1H$$

$$TX2Hk = TX2kH - TX2Va = 2*TX2H$$

each of which contains usually only a single associated useful signal with power double that actually received by each single antenna less the interfering component present together with the useful signal at the input of each attenuator and therefore with a negligible amplitude compared to the useful signals.
- demodulation by means of a respective demodulator D1,D2,D3,D4 in order to regenerate the four original signals S1V,S2V,S1H,S2H in baseband. It is therefore clear how with the method and apparatus according to the present invention it is possible to perform the demodulation, in a simple manner and using few conventional circuits, of modulated signals transmitted at high frequency on a single, short section, radio relay channel by pairs of antennas with several inputs and several outputs.

In addition, the phase-shifter circuits φ90 may in practice be implemented in association with automatic calculation means for adjusting phase-shift angles of the signals received only slightly different from 90°.

Although described in connection with certain constructional forms and certain preferred examples of embodiment of the invention, it is understood that the scope of protection of the present patent is defined solely by the following claims.

**Claims**

1. Method for reconstructing pairs of source signals (S1, S2; S1V, S1H; S2V, S2H) transmitted in high-frequency modulation on a single, "short-section", radio relay channel, comprising a first antenna (AT1) and a second antenna (AT2) transmitting respective useful signals (TX1,TX2;TX1V,TH1H,TX2V,TX2H) modulated by the associated source signals (S1,S2;S1V,S1H,S2V,S2H), a first antenna (AR1) and a second antenna (AR2) receiving, respectively, a first signal (RX1) which is the sum of the first useful signal (TX1;TX1V,TH1H) transmitted by the first antenna (AT1) of the two transmitting antennas (AT1,AT2) and at least one interfering component transmitted by the other transmitting antenna (AT2), and a second signal (RX2) which is the sum of the second useful signal (TX2;TX2V,TX2H) transmitted by the second transmitting antenna (AT2) and at least one interfering component transmitted by the first antenna (AT1), a receiver/demodulator (D1,D2;D1,D2,D3,D4) for reconstructing each source signal (S1,S2;S1V,S1H,S2V,S2H) transmitted,
**characterized in that** it comprises the following steps:

- 90° phase-shifting of the signals (RX2;RX2V,Rx2H) received by one antenna (AR2) of the two antennas (AR1,AR2) with generation of associated phase-shifted signals (RX2-90;RX2V-90,Rx2H-90);
- addition of the 90° phase-shifted signals (RX2-90;RX2V-90,RX2H-9.0) to the corresponding signal (RX1;RX1V,RX1H) output by the other antenna (AR1) of the two receiving antennas (AR1,AR2) with generation of a signal comprising only the components (TX1;T1V,TX1H) derived from the first transmitting antenna (AT1) ;
- subtraction between the signal (RX1) **received by** the first antenna (AR1) and the 90° phase-shifted signal (RX290) so as to generate a signal comprising only the components (TX2;TX2V,TX2H) derived from the second transmitting antenna (AT2);
- demodulation (D1,D2) of the separated signals.

2. Method according to Claim 1, **characterized in that** the source signals are two pairs (S1V,S1H;S2V,S2H) each transmitted by a respective transmitting antenna (AT1, AT2) with double polarization (V,H).

3. Method according to Claim 2, **characterized in that** it comprises the following steps:

- 90° phase-shifting of both the signals (RX2V,RX2H) received by one antenna (AR2) of the two antennas (AR1, AR2) with generation of respective phase-shifted signals (RX2V-90,RX2H-90);
- separation of the useful and interfering signals transmitted by each single transmitting antenna by means of:
- addition of the first vertical polarized signal (RX1V) received by the first antenna (AR1) and the 90° phase-shifted signal (RX2V-90) with generation of a first sum signal (TX1kV);
- subtraction between the same vertical co-polar signals (RX1V) output by the first antenna (AR1) and (RX2V-90) output by the phase-shifter ($\varphi_1$90) with generation of a first difference signal (TX2kV) ;
- addition of the first horizontal polarized signal (RX1H) received by the first antenna (AR1) and the 90° phase-shifted co-polar signal (RX2H-90) with generation of a second sum signal (TX1kV);
- subtraction between the same horizontal co-polar signals (RX1H) received by the first antenna (AR1) and the signal (RX2H-90) output by the second phase shifter ($\varphi_2$90) with generation of a second difference signal (TX2kH);
- suppression (300) of the interfering components of each sum/difference signal.

4. Method according to Claim 3, **characterized in that** said suppression (300) of the interfering components comprises the following steps:

- attenuation of each sum/difference signal (TX1kV,TX1kH,TX2kV,TX2kH) with generation of four signals (TX1Va, TX1Ha, TX2Va, TX2Ha) having the same amplitude and phase as the respective interfering component present in the said sum signals;
- subtraction of each of said attenuated signals (TX1Va,TX1Ha,TX2Va,TX2Ha) from the respective sum/difference signal (TX1kH,TX1kV,TX2kH,TX2kV);
- demodulation.

5. Method according to Claim 1, **characterized in that** said stage (100,200) for separating the useful signals operates in radiofrequency.

6. Method according to Claim 1, **characterized in that** said stage (100,200) for separating the useful signals operates in baseband.

7. Method according to Claim 3, **characterized in that** said stage (300) for suppressing the interfering components of each sum/difference signal is performed in radiofrequency.

8. Method according to Claim 1, **characterized in that** said stage (300) for suppressing the interfering components of each sum/difference signal is performed in baseband.

9. Apparatus for demodulating pairs of source signals (S1,S2;S1V,S1H,S2V,S2H) transmitted on a single, "short section", radio-relay, high-frequency channel, comprising a first antenna (AT1) and a second antenna (AT2) transmitting respective useful signals (TX1,TX2;TX1V,TH1H,TX2V,TX2H) modulated by the associated source signals (S1,S2;S1V,S1H,S2V,S2H), a first receiving antenna (AR1) and a second receiving antenna (AR2) which output respectively a first signal (RX1) which is the sum of the first useful signal (TX1;TX1V,TH1H) transmitted by the first antenna (AT1) of the two transmitting antennas and at least one interfering component transmitted by the other transmitting antenna (AT2), and a second signal (RX2) which is the sum of the second useful signal (TX2; TX2V,TX2H) transmitted by the second transmitting antenna (AT2) and at least one interfering component transmitted by the first antenna (AT1), a receiver/demodulator (D1,D2;D1,D2,D3,D4) for reconstructing each source signal (S1, S2; S1V, S1H, S2V, S2H) transmitted,
<u>**characterized in that**</u> it comprises

- a phase-shifter stage (100) comprising at least one phase-shifter circuit ($\varphi$90) able to receive at its input the signals received (RX2) by one antenna (AR2) of the two receiving antennas and generate a corresponding signal (RX290) which is 90° phase-shifted and has the same amplitude;
- a separator stage (200) able to generate at its output signals (TX1k,TX2k) each containing only the components (TX1,TX2) respectively transmitted by each single transmitting antenna (AT1,AT2); said stage (200) comprising:

at least one adder circuit (SM1) able to receive at its input the signal (RX1) output by the first antenna (AR1) and the signal (RX290) output by the phase shifter ($\varphi$90) and perform the sum of the two signals generating at its output a signal, (TX1k), comprising only the signals transmitted by only the first antenna (AT1);

at least one subtractor circuit (ST) able to receive at its input the same signals (RX1) output by the first antenna (AR1) and the signal (RX290) output by the phase shifter ($\varphi$90) and determine the difference between the two signals, generating at its output a signal (TX2k) which includes only the signals transmitted by only the second antenna (AT2).

10. Apparatus according to Claim 9, **characterized in that** the source signals are two pairs (S1V,S1H;S2V,S2H) each transmitted by a respective transmitting antenna (AT1,AT2) with double polarization (V,H).

11. Apparatus according to Claim 10, <u>**characterized in that**</u> said phase shifter block (100) comprises a pair of phase shifter circuits ($\varphi_1$90,$\varphi_2$90) each able to receive at its input a respective signal (RX2V,RX2H) received by one antenna (AR2) of the two receiving antennas (AR1,AR2) and generate a respective corresponding signal (RX290V,RX290H) which is 90° phase-displaced and has the same amplitude,
<u>and **in that**</u>

- said separator stage (200) is able to receive at its input the pair of signals (RX1V,RX1H) output by the first receiving antenna (AR1) and the pair of phase-shifted signals (RX290V,RX290H) output by the respective phase shifter ($\varphi_1$90, $\varphi_2$90) and generate at its output two pairs of signals (TX1kV,TX1kH;TX2kV,TX2kH) each containing only the components transmitted by one antenna only of the two transmitting antennas (AT1,AT2), said stage (200) comprising

a first adder (SM1) which, receiving at its input the first signal (RX1V) with vertical polarization (V) received by the first antenna (AR1) and the phase-shifted co-polar signal (RX290V) output by the first phase shifter ($\varphi_1$90), performs the addition thereof, generating at its output a signal TX1kV, which contains the sum of only the components (TX1V,TX1Hi) of the signals (TX1V,TX1H) transmitted by the first transmitting antenna (AT1);

a first subtractor (ST1) which, receiving at its input the same first signal (RX1V) with vertical polarization (V) received by the first receiving antenna (AR1) and the phase-shifted signal (RX290V) output by the first phase shifter ($\varphi_1$90) determines the difference thereof, generating at its output a signal TX2kV, which contains the sum of only the components of only the signals (TX2V,TX2H) transmitted by the second antenna (AT2);

a second adder (SM2) which, receiving at its input the first signal (RX1H) with horizontal polarization (H) received by the first antenna (AR1) and the signal (RX290H) output by the second phase shifter ($\varphi_2$90), performs the addition thereof, generating at its output a signal (TX1kH) which contains, added together, only the components (TX2H,TX2Vi) derived from the signals (TX2H,TX2V) transmitted only by the second transmitting antenna (AT2) ;

a second subtractor (ST2) which, receiving at its input the same first signal (RX1H) with horizontal polarization received by the first antenna (AR1) and the signal (RX290H) output by the second phase shifter ($\varphi_2$90) determines the difference thereof, generating at its output a signal (TX2kH) which contains, added together, only the components (TX2H, TX2Vi) derived from the signals (TX2H,TX2V) transmitted by only the second antenna (AT2), and **in that** it comprises a suppressor (300) block which is able to receive at its input the components of the signals generated by the separator circuit (200) and suppress from them the respective interfering cross-polar components (TX1kHi,TX1kVi,TX2kHi,TX2kVi) and which is arranged downstream of the separator circuit (200).

12. Apparatus according to Claim 11, **characterized in that** said suppressor block (300) comprises an attenuator circuit (A1,A2,A3,A4) for each of the signals (TX1kV) output by the first adder (SM1), (TX2kV) output by the first subtractor (ST1), (TX1kH) output by the second adder (SM2), (TX2kH) output by the second subtractor (ST2), said attenuators (A1,A2,A3,A4) being controlled by a device (AG) for adaptively controlling the attenuation.

13. Apparatus according to Claim 11, **characterized in that** said phase shifter block (100), separator block (200) and suppressor block (300) are arranged downstream of the receivers/demodulators (D1, D2, D3, D4) .

14. Apparatus according to Claim 9, **characterized in that** said phase shifter block (100) and separator block (200) are arranged upstream of the demodulators (D1, D2) .

15. Apparatus according to Claim 11, **characterized in that** said suppressor block (300) is upstream of the receivers/demodulators (D1,D2,D3,D4).

16. Apparatus according to Claim 11, **characterized in that** said suppressor block is downstream of the receivers/demodulators (D1,D2;D1,D2,D3,D4).

17. Apparatus according to Claim 9, **characterized in that** the phase shifter stage (100) and the separator stage (200) are digital.

18. Apparatus according to Claim 16 or 17, **characterized in that** the suppressor stage (300) is digital.

**Patentansprüche**

1. Verfahren zum Rekonstruieren von Paaren von Quellensignalen (S1, S2; S1V, S1 H, S2V, S2H), die bei Hochfrequenzmodulation an einem Einzelrichtfunkkanal "kurzen Abschnitts" gesendet werden, umfassend: eine erste Antenne (AT1) und eine zweite Antenne (AT2), die jeweilige Nutzsignale (TX1, TX2; TX1V, TH1H, TX2V, TX2H), moduliert durch die zugeordneten Quellensignale (S1, S2; S1V, S1 H, S2V, S2H), senden, eine erste Antenne (AR1) und eine zweite Antenne (AR2), die jeweils ein erstes Signal (RX1), das die Summe des ersten Nutzsignals (TX1; TX1V, TH1 H), das von der ersten Antenne (AT1) der zwei Sendeantennen (AT1, AT2) gesendet wird, und mindestens einer Störkomponente, die von der anderen Sendeantenne (AT2) gesendet wird, ist, und ein zweites Signal (RX2), das die Summe des zweiten Nutzsignals (TX2; TX2V, TX2H), das von der zweiten Sendeantenne (AT2) gesendet wird, und mindestens einer Störkomponente, die von der ersten Antenne (AT1) gesendet wird, ist, empfangen, einen Empfänger/Demodulator (D1, D2; D1, D2, D3, D4) zum Rekonstruieren jedes gesendeten Quellensignals (S1, S2; S1V, S1H, S2V, S2H),

**dadurch gekennzeichnet, dass** es die folgenden Schritte umfasst:

- Phasenverschieben um 90° der Signale (RX2; RX2V, Rx2H), die von einer Antenne (AR2) der zwei Antennen (AR1, AR2) empfangen werden, mit Erzeugung von zugeordneten phasenverschobenen Signalen (RX2-90;RX2V-90,Rx2H-90);

- Addieren der um 90° phasenverschobenen Signale (RX2-90; RX2V-90, RX2H-90) zu dem entsprechenden Signal (RX1; RX1V, RX1 H), das von der anderen Antenne (AR1) der zwei Empfangsantennen (AR1, AR2) ausgegeben wird, mit Erzeugung eines Signals, das nur die Komponenten (TXT; T1V,TX1H) umfasst, die von der ersten Sendeantenne (AT1) abgeleitet werden;

- Subtraktion zwischen dem Signal (RX1), das von der ersten Antenne (AR1) **empfangen wird**, und dem um 90° phasenverschobenen Signal (RX290), um ein Signal zu erzeugen, das nur die Komponenten (TX2; TX2V, TX2H) umfasst, die von der zweiten Sendeantenne (AT2) abgeleitet werden;

- Demodulation (D1,D2) der getrennten Signale.

2. Verfahren nach Anspruch 1, **dadurch gekennzeichnet, dass** die Quellensignale zwei Paare (S1V, S1H, S2V, S2H) sind, die jeweils von einer jeweiligen Sendeantenne (AT1, AT2) mit Doppelpolarisation (V, H) gesendet werden.

3. Verfahren nach Anspruch 2, **dadurch gekennzeichnet, dass** es die folgenden Schritte umfasst:

- Phasenverschieben um 90° der beiden Signale (RX2V, RX2H), die von einer Antenne (AR2) der zwei Antennen (AR1, AR2) empfangen werden, mit Erzeugung jeweiliger phasenverschobener Signale (RX2V-90, RX2H- 90);
- Trennung der Nutz- und Störsignale, die von jeder einzelnen Sendeantenne gesendet werden, mittels:
- Addition des ersten vertikalen polarisierten Signals (RX1V), das von der ersten Antenne (AR1) empfangen wird, und des um 90° phasenverschobenen Signals (RX2V-90), mit Erzeugung eines ersten Summensignals (TX1kV);
- Subtraktion zwischen den gleichen vertikalen kopolaren Signalen (RX1 V), die von der ersten Antenne (AR1) ausgegeben werden, und (RX2V-90), die von dem Phasenschieber ($\varphi_1$90) ausgegeben werden, mit Erzeugung eines ersten Differenzsignals (TX2kV);
- Addition des ersten horizontal polarisierten Signals (RX1 H), das von der ersten Antenne (AR1) empfangen wird, und des um 90° phasenverschobenen kopolaren Signals (RX2H-90), mit Erzeugung eines zweiten Summensignals (TX1 kV);
- Subtraktion zwischen den gleichen horizontalen kopolaren Signalen (RX1 H), die von der ersten Antenne (AR1) empfangen werden, und dem Signal (RX2H-90), das von dem zweien Phasenschieber ($\varphi_2$90) ausgegeben wird, mit Erzeugung eines zweiten Differenzsignals (TX2kH);
- Unterdrückung (300) der Störkomponenten jedes Summen-/Differenzsignals.

4. Verfahren nach Anspruch 3, **dadurch gekennzeichnet, dass** die Unterdrückung (300) der Störkomponenten die folgenden Schritte umfasst:

- Dämpfung jedes Summen-/Differenzsignals (TX1 kV, TX1 kH, TX2kV, TX2kH), mit Erzeugung von vier Signalen (TX1Va, TX1 Ha, TX2Va, TX2Ha), die die gleiche Amplitude und Phase wie die jeweilige Störkomponente aufweisen, die in den Summensignalen vorhanden ist;
- Subtraktion jedes der gedämpften Signale (TX1Va, TX1 Ha, TX2Va, TX2Ha) von dem jeweiligen Summen-/Differenzsignal (TX1kH, Tx1kV, TX2kH, Tx2kV);
- Demodulation.

5. Verfahren nach Anspruch 1, **dadurch gekennzeichnet, dass** die Stufe (100, 200) zum Trennen der Nutzsignale bei Hochfrequenz arbeitet.

6. Verfahren nach Anspruch 1, **dadurch gekennzeichnet, dass** die Stufe (100, 200) zum Trennen der Nutzsignale im Basisband arbeitet.

7. Verfahren nach Anspruch 3, **dadurch gekennzeichnet, dass** die Stufe (300) zum Unterdrücken der Störkomponenten jedes Summen-/Differenzsignals bei Hochfrequenz durchgeführt wird.

8. Verfahren nach Anspruch 1, **dadurch gekennzeichnet, dass** die Stufe (300) zum Unterdrücken der Störkomponenten jedes Summen-/Differenzsignals im Basisband durchgeführt wird.

9. Vorrichtung zum Demodulieren von Paaren von Quellensignalen (S1, S2; S1V, S1 H, S2V, S2H), die auf einem Einzel-Richtfunkhochfrequenzkanal "kurzen Abschnitts" gesendet werden, umfassend: eine erste Antenne (AT1) und eine zweite Antenne (AT2), die jeweilige Nutzsignale (TX1, TX2; TX1V, TH1H, TX2V, TX2H) senden, die von den zugeordneten Quellensignalen (S1, S2; S1V, S1 H, S2V, S2H) moduliert werden, eine erste Empfangsantenne (AR1) und eine zweite Empfangsantenne (AR2), die jeweils ein erstes Signal (RX1), das die Summe des ersten Nutzsignals (TX1; TX1V, TH1 H), das von der ersten Antenne (AT1) der zwei Sendeantennen ausgegeben wird, und mindestens einer Störkomponente, die von der anderen Sendeantenne (AT2) gesendet wird, ist, und ein zweites Signal (RX2), das die Summe des zweiten Nutzsignals (TX2; TX2V, TX2H), das von der zweiten Sendeantenne (AT2) gesendet wird, und mindestens einer Störkomponente, die von der ersten Antenne (AT1) gesendet wird, ist, ausgeben, einen Empfänger/Demodulator (D1, D2; D1,D2, D3, D4) zum Rekonstruieren jedes gesendeten Quellensignals (S1, S2; S1V, S1H, S2V, S2H),
**dadurch gekennzeichnet, dass** es umfasst:

- eine Phasenschieberstufe (100), welche umfasst:

mindestens einen Phasenschieber-Schaltkreis ($\varphi$90), der an seinem Eingang die Signale, die (RX2) von einer Antenne (AR2) der zwei Empfangsantennen empfangen werden, empfangen und ein entsprechendes Signal (RX290) erzeugen kann, das um 90° phasenverschoben ist und die gleiche Amplitude aufweist;

- eine Trennstufe (200), die an ihrem Ausgang Signale (TX1 k, TX2k) erzeugen kann, die jeweils nur die Komponenten (TX1, TX2) enthalten, die jeweils von jeder einzelnen Sendeantenne (AT1, AT2) gesendet werden; wobei die Stufe (200) umfasst:

mindestens einen Addierer-Schaltkreis (SM1), der an seinem Eingang das Signal (RX1), das von der ersten Antenne (AR1) ausgegeben wird, und das Signal (RX290), das von dem Phasenschieber ($\varphi$90) ausgegeben wird, empfangen und die Summe der zwei Signale ausführen kann, wobei er an seinem Ausgang ein Signal, (TX1 k), erzeugt, das nur die von nur der ersten Antenne (AT1) gesendeten Signale umfasst;
mindestens einen Subtraktor-Schaltkreis (ST), der an seinem Eingang die gleichen Signale (RX1), die von der ersten Antenne (AR1) ausgegeben werden, und das Signal (RX290), das von dem Phasenschieber ($\varphi$90) ausgegeben wird, empfangen und die Differenz zwischen den zwei Signalen ermitteln kann, wobei er an seinem Ausgang ein Signal, (TX2k), erzeugt, das nur die von nur der zweiten Antenne (AT2) gesendeten Signale umfasst.

10. Vorrichtung nach Anspruch 9, **dadurch gekennzeichnet, dass** die Quellensignale zwei Paare (S1V, S1H; S2V, S2H) sind, die jeweils von einer jeweiligen Sendeantenne (AT1, AT2) mit Doppelpolarisation (V, H) gesendet werden.

11. Vorrichtung nach Anspruch 10, **dadurch gekennzeichnet, dass** der Phasenschieberblock (100) ein Paar von Phasenschieber-Schaltkreisen ($\varphi_1$90, ($\varphi_2$90) umfasst, die jeweils an ihrem Eingang ein jeweiliges Signal (RX2V, RX2H), die von einer Antenne (AR2) der zwei Empfangsantennen (AR1, AR2) empfangen werden, empfangen und ein jeweiliges entsprechendes (RX290V, RX290H) erzeugen kann, das um 90° phasenversetzt ist und die gleiche Amplitude aufweist,
und dass

- die Trennstufe (200) an ihrem Eingang das Paar von Signalen (RX1V, RX1 H), die von der ersten Empfangsantenne (AR1) ausgegeben werden, und das Paar von phasenverschobenen Signalen (RX290V, RX290H), die von dem jeweiligen Phasenschieber ($\varphi_1$90, ($\varphi_2$90) ausgegeben werden, empfangen und an ihrem Ausgang zwei Paare von Signalen (TX1 kV, TX1kH; TX2kV, TX2kH) erzeugen kann, die jeweils nur die Komponenten enthalten, die nur von einer Antenne der zwei Sendeantennen (AT1, AT2) gesendet werden, wobei die Stufe (200) umfasst:

einen ersten Addierer (SM1), der unter Empfang an seinem Eingang des ersten Signals (RX1V) mit vertikaler Polarisation (V), das von der ersten Antenne (AR1) empfangen wird, und des phasenverschobenen kopolaren Signals (RX290V), das von dem ersten Phasenschieber ($\varphi_1$90) ausgegeben wird, die Addition derselben durchführt, wobei er an seinem Ausgang ein Signal TX1 kV erzeugt, das die Summe nur der Komponenten (TX1V, TX1 Hi) der Signale (TX1V,TX1H), die von der ersten Sendeantenne (AT1) gesendet werden, enthält;
einen ersten Subtraktor (ST1), der unter Empfang an seinem Eingang des gleichen ersten Signals (RX1V) mit vertikaler Polarisation (V), das von der ersten Sendeantenne (AR1) empfangen wird, und des phasenverschobenen Signals (RX290V), das von dem ersten Phasenschieber ($\varphi_1$90) ausgegeben wird, die Dif-ferenz derselben ermittelt, wobei er an seinem Ausgang ein Signal TX2kV erzeugt, das die Summe nur der Komponenten nur der Signale (TX2V, TX2H) enthält, die von der zweiten Antenne (AT2) gesendet werden;
einen zweiten Addierer (SM2), der unter Empfang an seinem Eingang des ersten Signals (RX1 H) mit horizontaler Polarisation (H), das von der ersten Antenne (AR1) empfangen wird, und des Signals (RX290H), das von dem zweiten Phasenschieber ($\varphi_2$90) ausgegeben wird, die Addition derselben durchführt, wobei er an seinem Ausgang ein Signal (TX1 kH) erzeugt, das zusammenaddiert nur die Komponenten (TX2H, TX2Vi) enthält, die von den Signalen (TX2H, TX2V) abgeleitet werden, die nur von der zweiten Sendeantenne (AT2) gesendet werden;
einen zweiten Subtraktor (ST2), der unter Empfang an seinem Eingang des gleichen ersten Signals (RX1 H) mit horizontaler Polarisation, das von der ersten Antenne (AR1) empfangen wird, und des Signals (RX290H), das von dem zweiten Phasenschieber ($\varphi_2$90) ausgegeben wird, die Differenz derselben ermittelt, wobei er an seinem Ausgang ein Signal (TX2kH) erzeugt, das zusammenaddiert nur die Komponenten (TX2H, TX2Vi) enthält, die von den Signalen (TX2H,TX2V) abgeleitet werden, die nur von der zweiten Antenne (AT2) gesendet werden, und dass es einen Unterdrückerblock (300) umfasst, der an seinem Eingang die Komponenten der Signale, die von dem Trenn-Schaltkreis (200) erzeugt werden, empfangen und von diesen die jeweiligen kreuzpolaren Störkomponenten (TX1 kHi, TX1 kVi, TX2kHi, TX2kVi) unterdrücken kann und der stromabwärts des Trenn-Schaltkreises (200) angeordnet ist.

12. Vorrichtung nach Anspruch 11, **dadurch gekennzeichnet, dass** der Unterdrückerblock (300) einen Dämpfer-Schaltkreis (A1, A2, A3, A4) für jedes der Signale (TX1 kV), die von dem ersten Addierer (SM1) ausgegeben werden, (TX2kV), die von dem ersten Subtrahierer (ST1) ausgegeben werden, (TX1 kH), die von dem zweiten Addierer (SM2) ausgegeben werden, (TX2kH), die von dem zweiten Subtrahierer (ST2) ausgegeben werden, umfasst, wobei die Dämpfer (A1, A2 ,A3, A4) von einer Vorrichtung (AG) zum adaptiven Steuern der Dämpfung gesteuert werden.

13. Vorrichtung nach Anspruch 11, **dadurch gekennzeichnet, dass** der Phasenschieberblock (100), der Trennblock (200) und der Unterdrückerblock (300) stromabwärts der Empfänger/Demodulatoren (D1, D2, D3, D4) angeordnet sind.

14. Vorrichtung nach Anspruch 9, **dadurch gekennzeichnet, dass** der Phasenschieberblock (100) und der Trennblock (200) stromaufwärts der Demodulatoren (D1, D2) angeordnet sind.

15. Vorrichtung nach Anspruch 11, **dadurch gekennzeichnet, dass** der Unterdrückerblock (300) stromaufwärts der Empfänger/Demodulatoren (D1, D2, D3, D4) ist.

16. Vorrichtung nach Anspruch 11, **dadurch gekennzeichnet, dass** der Unterdrückerblock stromabwärts der Empfänger/Demodulatoren (D1, D2; D1, D2, D3, D4) ist.

17. Vorrichtung nach Anspruch 9, **dadurch gekennzeichnet, dass** die Phasenschieberstufe (100) und die Trennstufe (200) digital sind.

18. Vorrichtung nach Anspruch 16 oder 17, **dadurch gekennzeichnet, dass** die Unterdrückerstufe (300) digital ist.

**Revendications**

1. Procédé de reconstruction de paires de signaux sources (S1, S2; S1V, S1H, S2V, S2H) émis en modulation haute fréquence sur une unique voie hertzienne «de courte section», comprenant une première antenne (AT1) et une seconde antenne (AT2) émettant des signaux utiles respectifs (TX1, TX2; TX1V, TX1H, TX2V, TX2H) modulés par les signaux sources associés (S1, S2; S1V, S1H, S2V, S2H), une première antenne (AR1) et une seconde antenne (AR2) recevant respectivement un premier signal (RX1), qui est la somme du premier signal utile (TX1; TX1V, TX1H) émis par la première antenne (AT1) des deux antennes d'émission (AT1, AT2) et d'au moins une composante parasite émise par l'autre antenne d'émission (AT2), et un second signal (RX2) qui est la somme du second signal utile (TX2; TX2V, TX2H) émis par la seconde antenne d'émission (AT2) et d'au moins une composante parasite émise par la première antenne (AT1), un récepteur/démodulateur (D1, D2; D1, D2, D3, D4) permettant de reconstruire chaque signal source (S1, S2; S1V, S1H, S2V, S2H) émis,
**caractérisé en ce qu'**il fait appel aux étapes suivantes consistant:

- à déphaser de 90° les signaux (RX2; RX2V, RX2H) reçus par une antenne (AR2) des deux antennes (AR1, AR2) et à générer des signaux déphasés associés (RX2-90; RX2V-90, RX2H-90);
- à additionner les signaux déphasés de 90° (RX2-90; RX2V-90, RX2H-90) au signal correspondant (RX1; RX1V, RX1H) délivré par l'autre antenne (AR1) des deux antennes de réception (AR1, AR2) et à générer un signal ne comprenant que les composantes (TX1; TX1V, TX1H) dérivées de la première antenne d'émission (AT1);
- à effectuer une soustraction entre le signal (RX1) reçu par la première antenne (AR1) et le signal déphasé de 90° (RX2-90) de façon à générer un signal ne comprenant que les composantes (TX2; TX2V, TX2H) dérivées de la seconde antenne d'émission (AT2);
- à démoduler (D1, D2) les signaux séparés.

2. Procédé selon la revendication 1, **caractérisé en ce que** les signaux sources sont deux paires (S1V, S1H; S2V, S2H) émises toutes les deux par une antenne d'émission (AT1, AT2) à double polarisation (V, H).

3. Procédé selon la revendication 2, **caractérisé en ce qu'**il fait appel aux étapes suivantes consistant:

- à déphaser de 90° les deux signaux (RX2V, RX2H) reçus par une antenne (AR2) des deux antennes (AR1, AR2) et à générer des signaux déphasés respectifs (RX2V-90, RX2H-90);
- à séparer les signaux utiles et parasites émis par chaque unique antenne d'émission par:
- addition du premier signal polarisé verticalement (RX1V) reçu par la première antenne (AR1) et du signal déphasé de 90° (RX2V-90) et à générer un premier signal de somme (TX1kV) ;
- soustraction entre les mêmes signaux copolaires verticaux (RX1V) délivré par la première antenne (AR1) et (RX2V-90) délivré par le déphaseur ($\varphi_1$90) et génération d'un premier signal de différence (TX2kV);
- addition du premier signal polarisé horizontalement (RX1H) reçu par la première antenne (AR1) et du signal copolaire déphasé de 90° (RX2H-90) et génération d'un second signal de somme (TX1kV);
- soustraction entre les mêmes signaux copolaires horizontaux (RX1H) reçu par la première antenne (AR1) et (RX2H-90) délivré par le second déphaseur ($\varphi_2$90) et génération d'un second signal de différence (TX2kH);
- suppression (300) des composantes parasites de chaque signal de somme/de différence.

4. Procédé selon la revendication 3, **caractérisé en ce que** ladite suppression (300) des composantes parasites fait appel aux étapes suivantes consistant:

- à atténuer chaque signal de somme/de différence (TX1kV, TX1kH, TX2kV, TX2kH) et à générer quatre signaux (TX1Va, TX1Ha, TX2Va, TX2Ha) ayant la même amplitude et la même phase que la composante parasite respective présente dans lesdits signaux de somme;
- à soustraire chacun desdits signaux atténués (TX1Va, TX1Ha, TX2Va, TX2Ha) du signal de somme/de différence respectif (TX1kH, TX1kV, TX2kH, TX2kV);
- à démoduler.

5. Procédé selon la revendication 1, **caractérisé en ce que** ledit étage (100, 200) de séparation des signaux utiles opère en radiofréquence.

6. Procédé selon la revendication 1, **caractérisé en ce que** ledit étage (100, 200) de séparation des signaux utiles opère en bande de base.

7. Procédé selon la revendication 3, **caractérisé en ce que** ledit étage (300) de suppression des composantes parasites de chaque signal de somme/de différence opère en radiofréquence.

8. Procédé selon la revendication 1, **caractérisé en ce que** ledit étage (300) de suppression des composantes parasites de chaque signal de somme/de différence opère en bande de base.

9. Procédé de démodulation de paires de signaux sources (S1, S2; S1V, S1H, S2V, S2H) émis sur une unique voie hertzienne haute fréquence «de courte section», comprenant une première antenne (AT1) et une seconde antenne (AT2) émettant des signaux utiles respectifs (TX1, TX2; TX1V, TX1H, TX2V, TX2H) modulés par les signaux sources associés (S1, S2; S1V, S1H, S2V, S2H), une première antenne de réception (AR1) et une seconde antenne de réception (AR2) qui délivrent respectivement un premier signal (RX1) qui est la somme du premier signal utile (TX1; TX1V, TX1H), émis par la première antenne (AT1) des deux antennes d'émission et d'au moins une composante parasite émise par l'autre antenne d'émission (AT2), et un second signal (RX2) qui est la somme du second signal utile (TX2; TX2V, TX2H) émis par la seconde antenne d'émission (AT2) et d'au moins une composante parasite émise par la première antenne (AT1), un récepteur/démodulateur (D1, D2; D1, D2, D3, D4) permettant de reconstruire chaque signal source (S1, S2; S1V, S1H, S2V, S2H) émis,
**caractérisé en ce qu'**il comprend:

- un étage de déphasage (100) comprenant
au moins un circuit de déphasage ($\varphi$90) pouvant recevoir, au niveau de son entrée, les signaux (RX2) reçus par une antenne (AR2) des deux antennes de réception et générer un signal correspondant (RX290) qui est déphasé de 90° et qui a la même amplitude;
- un étage de séparation (200) pouvant générer, au niveau de sa sortie, des signaux (TX1k, TX2k) ne contenant tous les deux que les composantes (TX1, TX2) émises respectivement par chaque unique antenne d'émission (AT1, AT2); ledit étage (200) comprenant:

au moins un circuit additionneur (SM1) pouvant recevoir, au niveau de son entrée, le signal (RX1) délivré par la première antenne (AR1) et le signal (RX290) délivré par le déphaseur (φ90) et faire la somme des deux signaux en générant, au niveau de sa sortie, un signal (TX1k) ne comprenant que les signaux émis par la première antenne (AT1) ;

au moins un circuit de soustraction (ST) pouvant recevoir, au niveau de son entrée, les mêmes signaux (RX1) délivré par la première antenne (AR1) et (RX290) délivré par le déphaseur (φ90) et déterminer la différence entre les deux signaux, en générant, au niveau de sa sortie, un signal (TX2k) qui ne comprend que les signaux émis par la seconde antenne (AT2).

10. Appareil selon la revendication 9, **caractérisé en ce que** les signaux sources sont deux paires (S1V, S1H; S2V, S2H) émises toutes les deux par une antenne d'émission respective (AT1, AT2) avec une double polarisation (V, H).

11. Appareil selon la revendication 10, **caractérisé en ce que** ledit bloc de déphasage (100) comprend une paire de circuits de déphasage ($\varphi_1 90$, $\varphi_2 90$) pouvant chacun recevoir au niveau de leur entrée un signal respectif (RX2V, RX2H) reçu par une antenne (AR2) des deux antennes de réception (AR1, AR2) et générer un signal correspondant respectif (RX290V, RX290H) qui est déphasé de 90° et qui a la même amplitude, et **en ce que**

- ledit étage de séparation (200) peut recevoir, au niveau de son entrée, les deux signaux (RX1V, RX1H) délivrés par la première antenne de réception (AR1) et les deux signaux déphasés (RX290V, RX290H) délivrés par le déphaseur respectif ($\varphi_1 90$, ($\varphi_2 90$) et générer, au niveau de sa sortie, deux paires de signaux (TX1kV, TX1kH, TX2kV, TX2kH) ne contenant chacun que les composantes émises par une seule antenne des deux antennes d'émission (AT1, AT2), ledit étage (200) comprenant

un premier additionneur (SM1) qui, en recevant au niveau de son entrée le premier signal (RX1V) de polarisation verticale (V) reçu par la première antenne (AR1) et le signal copolaire déphasé (RX290V) délivré par le premier déphaseur ($\varphi_1 90$), en exécute l'addition, en générant, au niveau de sa sortie, un signal (TX1kV) qui ne contient que la somme des composantes (TX1V, TX1Hi) des signaux (TX1V, TX1H) émis par la première antenne d'émission (AT1);

un premier soustracteur (ST1) qui, en recevant au niveau de son entrée le même premier signal (RX1V) de polarisation verticale (V) reçu par la première antenne de réception (AR1) et le signal déphasé (RX290V) délivré par le premier déphaseur ($\varphi_1 90$), en détermine la différence, en générant, au niveau de sa sortie, un signal (TX2kV) qui ne contient que la somme des composantes des signaux (TX2V, TX2H) uniquement émis par la seconde antenne (AT2);

un second additionneur (SM2) qui, en recevant au niveau de son entrée le premier signal (RX1H) de polarisation horizontale (H) reçu par la première antenne (AR1) et le signal (RX290H) délivré par le second déphaseur ($\varphi_2 90$), en exécute l'addition, en générant, au niveau de sa sortie, un signal (TX1kH), qui ne contient, ajoutées l'une à l'autre, que les composantes (TX2H, TX2Vi) dérivées des signaux (TX2H, TX2V) émis uniquement par la seconde antenne d'émission (AT2);

un second soustracteur (ST2) qui, en recevant au niveau de son entrée le même premier signal (RX1H) de polarisation horizontale reçu par la première antenne (AR1) et le signal (RX290H) délivré par le second déphaseur ($\varphi_2 90$), en détermine la différence, en générant, au niveau de sa sortie, un signal (TX2kH) qui ne contient, ajoutées l'une à l'autre, que les composantes (TX2H, TX2V1) dérivées des signaux (TX2H, TX2V) émis uniquement par la seconde antenne (AT2), et **en ce qu'**il comprend un bloc de suppression (300) pouvant recevoir, au niveau de son entrée, les composantes des signaux générés par le circuit de séparation (200) et en supprimer les composantes parasites de polarisation croisée respectives (TX1kHi, TX1kVi, TX2kHi, TX2kVi) et qui est disposé en aval du circuit de séparation (200).

12. Appareil selon la revendication 11, **caractérisé en ce que** ledit bloc de suppression (300) comprend un circuit atténuateur (A1, A2, A3, A4) pour chacun des signaux (TX1kV) délivré par le premier additionneur (SM1), (TX2kV) délivré par le premier soustracteur (ST1), (TX1lkH) délivré par le second additionneur (SM2), (TX2kH) délivré par le second soustracteur (ST2), lesdits atténuateurs (A1, A2, A3, A4) étant commandés par un dispositif (AG) permettant une commande adaptative de l'atténuation.

13. Appareil selon la revendication 11, **caractérisé en ce que** ledit bloc de déphasage (100), ledit bloc de séparation (200) et ledit bloc de suppression (300) sont disposés en aval des récepteurs/démodulateurs (D1, D2, D3, D4).

14. Appareil selon la revendication 9, **caractérisé en ce que** ledit bloc de déphasage (100) et ledit bloc de séparation (200) sont disposés en amont des démodulateurs (D1, D2).

15. Appareil selon la revendication 11, **caractérisé en ce que** ledit bloc de suppression (300) se trouve en amont des récepteurs/démodulateurs (D1, D2, D3, D4).

16. Appareil selon la revendication 11, **caractérisé en ce que** ledit bloc de suppression se trouve en aval des récepteurs/démodulateurs (D1, D2; D1, D2, D3, D4).

17. Appareil selon la revendication 9, **caractérisé en ce que** l'étage de déphasage (100) et l'étage de séparation (200) sont numériques.

18. Appareil selon la revendication 16 ou 17, **caractérisé en ce que** l'étage de suppression (300) est numérique.

Fig.1

Fig.2

Fig.3

Fig.4

Fig.5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 1439302 A